# EUROPÄISCHE PATENTSCHRIFT

(11) **EP 0 611 342 B1**
(45) Veröffentlichungstag und Bekanntmachung des Hinweises auf die Patenterteilung: **08.07.1998**
(21) Anmeldenummer: 93912788.2
(22) Anmeldetag: 25.05.1993
(51) Int. Cl.: B29D 17/00

(54) **FOLIENARTIGES KUNSTSTOFFMATERIAL**
FOIL-SHAPED PLASTIC MATERIAL
MATIERE PLASTIQUE SOUS FORME DE FILM

(30) Priorität: 26.05.1992 DE 4217438; 21.10.1992 DE 4235530
(43) Veröffentlichungstag der Anmeldung: 24.08.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301314
(87) Internationale Veröffentlichungsnummer: WO9324308

(56) Entgegenhaltungen:
- EP-A- 0 046 526
- DE-A- 2 357 976
- US-A- 4 184 829
- PATENT ABSTRACTS OF JAPAN vol. 10, no. 242 (M-509)(2298) 21 August 1986 & JP,A,61 074 807 (TADAHIRO YUKI) 17 April 1986 see abstract
- PATENT ABSTRACTS OF JAPAN vol. 14, no. 20 (C-676)(3963) 17 Januar 1990 & JP,A,1 262 958 (PURAKOO KK) 19 October 1989 see abstract

## Beschreibung

Die Erfindung betrifft ein aus thermoplastischen Kunststoffabfallfolien hergestelltes folienartiges, flexibles und biegsames Kunststoffmaterial.

Insbesondere durch die Verwendung von Verpackungsmaterial aus Kunststoffolien fällt sehr viel Abfall an. Abfälle aus Kunststoffen können chemisch oder werkstofflich recycelt werden. Beim werkstofflichen Recycling wird der Alt-Kunststoff zerkleinert, gereinigt, aufgeschmolzen, regranuliert und anschließend wieder erwärmt und zu einem neuen Produkt verarbeitet. Dieses Verfahren eignet sich zur Wiederverwendung von einheitlichen Folienabfällen. Fallen fremde, schwer qualifizierbare und farbige Folienabfälle an, so können sie in der Regel nur zu Produkten minderer Güte und Qualität unter relativ hohen Sortier- und Aufbereitungskosten verarbeitet werden. Außerdem besitzen die Kunststoffolien neben dem Rohstoffwert auch aufgrund ihrer flächigen Form und dem besonders hohen Aufwand, mit dem die Folienherstellung verbunden ist, einen hohen "Energiegehalt", welcher bei Verkleinern und Regranulieren der Folien vollkommen verloren geht.

Die Herstellung von folienartigen Kunststoffmaterial bzw. Kunststoffolien geschieht meistens im Folienblasverfahren, welches Verfahren teuer und aufwendig ist. Für manche Anwendungen ist es jedoch nicht notwendig, einwandfreie, neue Folien einzusetzen, es würde der Einsatz von einem weniger hochwertigen Folienmaterial genügen.

Aus der EP-A-0 046 526 ist ein Verfahren zur Herstellung von Bahnen aus thermoplastischen Kunststoffen, insbesondere als Belagware für das Bauwesen, bekannt. Dabei wird der thermoplastische Kunststoff in Gestalt von Teilchen, wie Schnitzel, Krümel, Abschnitte, Stücke, Chips oder dgl. fortlaufend zu einer Rohmaterialschicht aufgeschüttet, die Rohmaterialschicht wird erwärmt und abschnittsweise unter Verwendung von aus der Spanplatten-Herstellung bekannten Pressen mit einem Druck von 10 bis 60 kp/cm² zu der Bahn verpreßt, verschweißt und dann abgekühlt.

Die Bahn soll eine größere kompakte Dicke aufweisen und frei von Lufteinschlüssen sein. Die verpreßte Bahn weist eine Dicke bis wenigstens 10 mm, vorzugsweise 4 bis 8 mm auf und kann danach in mehrere Bahnen gespalten werden, die selbst eine Dicke von 2 mm bis 2,5 mm aufweisen können. Die dabei verwendeten Kunststoffteilchen können mittlere Durchmesser von wenigen Millimetern bis zu 10 und mehr Millimetern aufweisen, während die geringsten Seitenlängen unter 1 mm und die größten Seitenlängen bei 50 und mehr Millimeter betragen können. Bei den dort verwendeten Teilen handelt es sich nicht um Folien bzw. Folienteile. Die verwendeten Teilchen werden beim Erhitzen und Pressen in ihrer Struktur verändert. Um eine ausreichende Vernetzung der Teilchen zu erhalten werden darüber hinaus die Teilchen mit Vernetzungsmitteln gemischt.

Gemäß einem dort angegebenen Beispiel weisen die Teilchen eine Größe von circa 30 mm * 12 mm * 5 mm auf, wobei eine Rohmaterialbahn von 25 mm aufgeschüttet und nach dem Pressen eine Bahn mit einer Dicke von 5 mm erhalten wurde.

Ein Walz- oder Kalandriervorgang wird dort als nachteilig angesehen, auch sollen keine Lufteinschlüsse im fertigen Produkt vorhanden sein, weshalb ein solch hoher Druck beim Pressen verwendet wird.

Aufgabe der vorliegenden Erfindung ist es, Kunststoffolienabfälle, insbesondere thermoplastische Kunststoffolienabfälle, ökonomisch wieder einzusetzen, wobei das dazugehörige Verfahren preisgünstig und einfach sein soll.

Diese Aufgabe wird durch das im Anspruch 1 angegebene folienartige Kunststoffmaterial gelöst. Ein Verfahren zur Herstellung eines derartigen Materials gibt Anspruch 10 an. Die Unteransprüche stellen vorteilhafte Weiterbildungen dar.

Das erfindungsgemäße folienartige, flexible und biegsame Kunststoffmaterial mit einer Dicke von weniger als 0,5 mm besteht aus durch Druck- und Temperatureinwirkung miteinander verbundenen Stücken oder Streifen aus thermoplastischen Kunststoffabfallfolien.

Zur Herstellung des erfindungsgemäßen Flächengebildes ist keine werkstoffliche oder chemische Aufarbeitung der angefallenen Kunststoffabfälle bzw. Kunststoffabfallfolien notwendig. Die Kunststoffe werden chemisch nicht zerstört, die Verarbeitung und der Einsatz von Kunststoffabfallfolien gemäß der Erfindung beschränkt sich nur auf mechanische und thermische Einwirkung auf das Ausgangsmaterial. Die Verbindung der Folienstücke oder -streifen miteinander ist fest.

In einer vorteilhaften Ausführungsform der Erfindung sind der Druck und die Temperatur so hoch gewählt, daß eine homogene Struktur des hergestellten Folienmaterials vorliegt. Sie liegt dann vor, wenn besonders dünne Folien verwendet wurden und die Prozeßtemperatur hoch genug war, damit die Folien miteinander verschmelzen.

Das neu hergestellte folienartige Material kommt dem Ausgangsmaterial sowohl in seinem Aussehen, als auch in seinen Eigenschaften sehr nahe. Sind z.B. farblose und durchsichtige Folienstücke zu einer neuen Folie miteinander verbunden, so ist das neue Folienmaterial ebenfalls durchsichtig und farblos.

Das folienartige Kunststoffmaterial kann aus unterschiedlichen Folienmaterialien bestehen. Die Folien können unterschiedliche farbliche Ausgestaltung, Dicke, Größenordnung oder Werkstoffeigenschaften und Werkstoffzusammensetzung aufweisen. Durch gezielte Auswahl von z.B. verschiedenfarbigen Folienstücken oder -streifen entsteht ein neues folienartiges Material, das ein gewünschtes, vorgegebenes Farbmuster aufweisen. Auf ein Folienfärben kann verzichtet werden.

Die verwendeten Folienstreifen weisen vorteilhafterweise eine minimale Breite von ca. 0,8 mm auf. Auch die minimale Stückegröße liegt in diesem Bereich. Die Länge der verwendeten Streifen kann einige Zentimeter betragen vorteilhafterweise ca. 2 bis 3 cm.

Sind die miteinander zu verbindenden Stücke derart aufeinander, nebeneinander oder teilweise überdeckend angeordnet, daß folienfreie Räume entstehen, weist das daraus hergestellte folienartige Material Öffnungen auf, die durch fehlendes Material entstanden sind. Die Öffnungen können aber auch z.B. durch Schlitzen, Stanzen oder Prägen des folienartigen Materials eingebracht werden. Wird das folienartige Material einer besonderen Wärmebehandlung unterzogen, so liegt es in geschrumpfter Form vor. Ist ein mit Öffnungen versehenes Material geschrumpft, so entsteht ein netzartiges Material.

Neben einem ebenen, glatten Folienmaterial kann auch räumlich ausgebildetes und dreidimensional verformtes Material eingesetzt werden. Sind die zu verarbeitenden Folienabfälle z.B. durch Wärme oder mechanische Einflüsse bereits verformt, so sind sie in dieser Form zur Herstellung des erfindungsgemäßen Kunststoffmaterials verwendbar. Vorteilhaft ist es, wenn die Kunststoffolienstücke oder -streifen aus gereckter Folie bestehen. Durch Temperatureinfluß neigen sie zum Schrumpfen und verformen sich zu dreidimensionalen Stücken, die dann aufgewölbt oder ähnlich volumenvergrößert vorliegen. Durch die Verwendung von solchen Schrumpfstücken wird eine neue Folie erhalten, deren Farbmusterung besondere scharfe, abgegrenzte Strukturen aufweist. Die dreidimensional verformten Folienstücke haben außer den oben erwähnten Vorteilen noch den Vorteil, daß sie sich besondere gut durch Druck verarbeiten lassen.

Das im Anspruch 9 beschriebene Verfahren zur Herstellung des folienartigen Kunststoffmaterials ist einfach durchführbar und preiswert. Abfallfolien aus thermoplastischen Kunststoffen werden zu unebenen Streifen oder Stücken zerkleinert, zu einer Bahn in mindestens einer Lage aufgeschüttet und unter Druck- und Temperatureinfluß zu einem folienartigen Kunststoffmaterial mit einer Dicke unter 0,5 mm unter Druck- und Temperatureinfluß durch Walzen verbunden werden.

Für manche Anwendungen kann es vorteilhaft sein, wenn die Umformtemperatur die Schmelztemperatur der verwendeten Kunststoffolien übersteigt. Dadurch wird erreicht, daß die Folien zumindest teilweise verschmelzen. Zur Herstellung des erfindungsgemäßen Kunststoffmaterials können verschiedene Materialien verwendet werden, wodurch unterschiedliche Eigenschaften des Materials erreicht werden können.

Bei der Herstellung des folienartigen Kunststoffmaterials werden die Folienstücke oder -streifen vor der Verbindung zu einer Bahn aufgeschüttet.

In einer vorteilhaften Ausgestaltung ist vorgesehen, daß die Folienstücke bzw. - streifen auf einem Träger, welcher aus Folie, Gewebe, Monofilen, Fäden oder Netz bestehen kann, abgelegt und mit diesem zu einem Gebilde verbunden werden.

Es kann auch eine ganz dünne Schicht aus dünnen Folienstücken auf einen aus einem dünnen Folienmaterial bestehenden Träger z.B. durch eine Vakuumlochwalze aufgegeben und mit diesem unter Druck und Temperatur verbunden werden. Dadurch wird eine neue, dünne Folie erhalten.

Das folienartige Kunststoffmaterial kann bereits während seines Herstellungsprozesses durch Aufprägen bzw. Walzen eine Riffelstruktur mit verschiedenen Oberflächenmustern und Strukturen versehen werden.

Die Erfindung wird anhand von in der Zeichnung dargestellten Ausführungsbeispielen näher erläutert.

Es zeigt:
- Fig. 1: eine schematische Darstellung von aufeinander liegenden Folienstücken und / oder Streifen vor dem Verbinden;
- Fig. 2: eine Draufsicht auf die Darstellung gemäß der Fig. 1;
- Fig. 3: eine Darstellung des erfindungsgemäßen, folienartigen Kunststoffmaterials,
und
- Fig. 4: eine Draufsicht auf die Darstellung gemäß der Fig. 3.

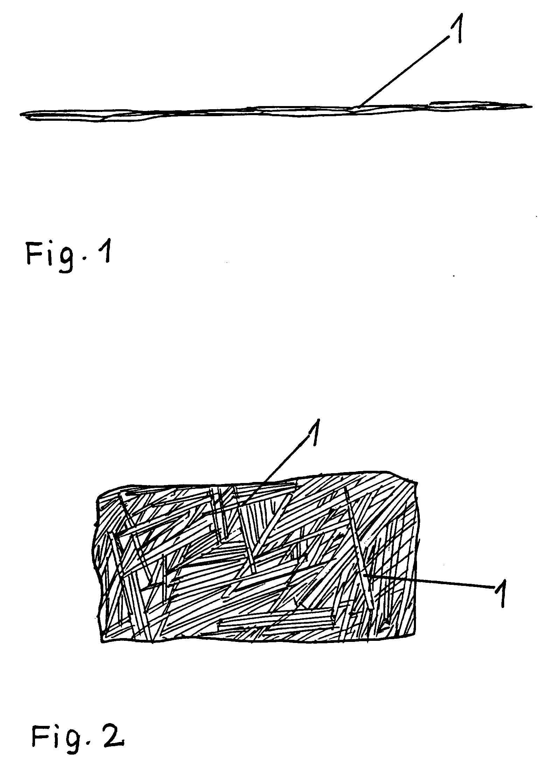

Fig. 1 zeigt aufeinander liegende Stücke oder Streifen 1 aus Kunststoffabfallfolien vor dem Verbindungsvorgang. Die einzelnen Stücke oder Streifen 1 sind eben und in zwei Lagen aufeinander aufgeschichtet.

In Fig. 2 ist die flächige Anordnung der Stücke und Streifen 1 dargestellt. Sie sind unter verschiedenen Winkeln zueinander angeordnet und lassen keine materialfreien Räume zwischen sich.

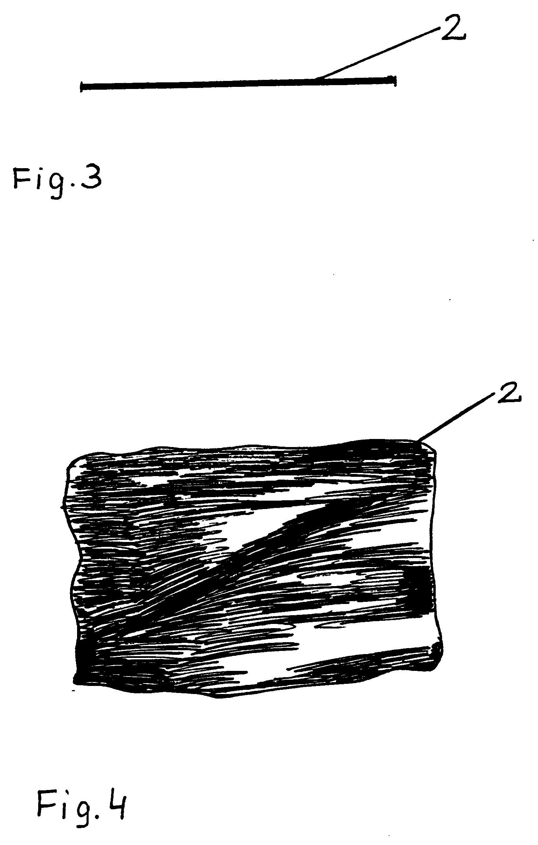

Aus Fig. 3 ist entnahmbar, daß die locker aufeinander geschichteten Folienstücke und Streifen 1 zu einem im wesentlichen homogenen folienartigen Material 2 miteinander verbunden werden.

Fig. 4 gibt in schematischer Darstellung die Farbmusterung bzw. die Musterung eines aus verschiedenfarbigen Folien hergestellten folienartigen Materials wieder.

## Patentansprüche

1. Folienartiges, flexibles und biegsames Kunststoffmaterial (2) mit einer Dicke von weniger als 0,5 mm bestehend aus durch Druck- und Temperatureinwirkung miteinander verbundenen, räumlich ausgebildeten Stücken oder Streifen (1) aus thermoplastischen Kunststoffabfallfolien.

2. Folienartiges Kunststoffmaterial nach Anspruch 1, dadurch gekennzeichnet, daß das Kunststoffmaterial (2) eine homogene Struktur aufweist.

3. Folienartiges Kunststoffmaterial nach Anspruch 1 oder 2, dadurch gekennzeichnet, daß das folienartige Kunststoffmaterial Öffnungen aufweist.

4. Folienartiges Kunststoffmaterial nach einem oder mehreren der vorangegangenen Ansprüche, dadurch gekennzeichnet, daß das folienartige Kunststoffmaterial geschrumpft ist.

5. Folienartiges Kunststoffmaterial nach Anspruch 4, dadurch gekennzeichnet, daß es zu einem Netz geschrumpft ist.

6. Folienartiges Kunststoffmaterial nach einem der vorangegangenen Ansprüche, dadurch gekennzeichnet, daß die verwendeten Folienstücke oder -streifen räumlich ausgebildet sind.

7. Folienartiges Kunststoffmaterial nach einem der vorangegangenen Ansprüche, dadurch gekennzeichnet, daß das Material teilverdichtet bzw. mit einer Prägestruktur versehen ist.

8. Folienartiges Kunststoffmaterial nach einem der vorangegangenen Ansprüche, dadurch gekennzeichnet, daß das Material einen aus einer dünnen Polyethylenfolie bestehenden Träger aufweist und daß die darauf liegenden Kunststoffstücke aus dünnen Folien bestehen und eine dünne Schicht bilden.

9. Folienartiges Kunststoffmaterial nach einem der vorangegangenen Ansprüche, dadurch gekennzeichnet, daß die Folienstücke oder Folienstreifen (1) aus verschiedenen Kunststoffmaterialien bestehen.

10. Verfahren zur Herstellung des folienartigen Kunststoffmaterials nach einem der vorangegangenen Ansprüche, dadurch gekennzeichnet, daß Abfallfolien aus thermoplastischen Kunststoffen zu unebenen Streifen oder Stücken (1) zerkleinert, zu einer Bahn in mindestens einer Lage aufgeschüttet und zu einem folienartigen Kunststoffmaterial (2) mit einer Dicke unter 0,5 mm unter Druck- und Temperatureinfluß durch Walzen verbunden werden.

## Claims

1. Film-like flexible and bendable synthetic resin material (2) having a thickness of less than 0.5 mm comprising spatially arranged pieces or strips (1) of scrap thermoplastic synthetic resin film bonded together by the action of pressure and temperature.

2. Film-like synthetic resin material according to claim 1, characterised in that the synthetic resin material (2) has a homogeneous structure.

3. Film-like synthetic resin material according to claim 1 or 2, characterised in that the film-like synthetic material has openings in it.

4. Film-like synthetic resin material according to one or more of the foregoing claims, characterised in that the film-like synthetic resin material is shrunk.

5. Film-like synthetic resin material including to claim 4, characterised in that it is shrunk to form a net.

6. Film-like synthetic resin material according to one of the foregoing claims, characterised in that the pieces or strips of film which are used are of three-dimensional form.

7. Film-like synthetic resin material according to one of the foregoing claims, characterised in that the material is partially compressed or provided with a stamped-out structure.

8. Film-like synthetic resin material according to one of the foregoing claims, characterised in that the material comprises a carrier made of thin polyethylene film and that the pieces of synthetic resin lying on it comprise thin films and form a thin layer.

9. Film-like synthetic resin material according to one of the foregoing claims, characterised in that the pieces or strips (1) of film comprise different synthetic resin materials.

10. Method of producing the film-like synthetic resin material according to one of the foregoing claims, characterised in that the scrap films of thermoplastic synthetic resins are reduced to uneven strips or pieces (1), deposited in at least one layer on a track and are bonded together by rolling with the action of pressure and temperature to form a film-like synthetic resin material (2) having a thickness below 0.5 mm.

## Revendications

1. Matière synthétique (2) flexible et souple en forme de feuille d'une épaisseur inférieure à 0,5 mm, composée de morceaux ou de rubans (1) de déchets de feuille en matière synthétique thermoplastiques d'une forme tridimensionnelle, qui se sont reliés les uns aux autres sous l'action thermique et d'une pression.

2. Matière synthétique en forme de feuille selon la revendication 1, caractérisée en ce que la matière synthétique (2) a une structure homogène.

3. Matière synthétique en forme de feuille selon la revendication 1 ou 2, caractérisée en ce que la matière synthétique en forme de feuille a des trous.

4. Matière synthétique en forme de feuille selon l'une quelconque ou plusieurs des revendications précédentes, caractérisée en ce que la matière synthétique en forme de feuille s'est contractée.

5. Matière synthétique en forme de feuille selon la revendication 4, caractérisée en ce qu'elle s'est contractée pour prendre une forme réticulaire.

6. Matière synthétique en forme de feuille selon l'une quelconque des revendications précédentes, caractérisée en ce que les morceaux ou les rubans de feuille utilisés ont une forme tridimensionnelle.

7. Matière synthétique en forme de feuille selon l'une quelconque des revendications précédentes, caractérisée en ce que la matière est partiellement compactée, respectivement a une structure d'empreinte.

8. Matière synthétique en forme de feuille selon l'une quelconque des revendications précédentes, caractérisée en ce que la matière possède un support qui consiste en une feuille de polyéthylène mince et en ce que les morceaux de matière synthétique qui y sont aménagés consistent en des feuilles minces et constituent une couche mince.

9. Matière synthétique en forme de feuille selon l'une quelconque des revendications précédentes, caractérisée en ce que les morceaux de feuille ou les rubans de feuille (1) consistent en différentes matières synthétiques.

10. Procédé pour la fabrication d'une matière synthétique en forme de feuille selon l'une quelconque des revendications précédentes, caractérisée en ce que des feuilles de déchets en matière synthétique thermoplastique sont fractionnées en rubans ou morceaux (1) inégaux, sont aménagés en une bande d'une couche au moins, sont reliés pour former une matière synthétique en forme de feuille (2) d'un épaisseur inférieure à 0,5 mm sous l'influence thermique et d'une pression.
